# EUROPEAN PATENT SPECIFICATION

(11) **EP 1 173 322 B1**
(45) Date of publication and mention of the grant of the patent: **15.09.2004**
(21) Application number: 00912013.0
(22) Date of filing: 28.02.2000
(51) Int. Cl.: B29C 70/44, B29C 53/82

(54) **METHOD FOR FABRICATING COMPOSITE PRESSURE VESSELS AND PRODUCTS FABRICATED BY THE METHOD**
VERFAHREN ZUR HERSTELLUNG VON DRUCKBEHÄLTERN AUS VERBUNDWERKSTOFF UND DURCH DIESES VERFAHREN HERGESTELLTE GEGENSTÄNDE
PROCEDE DE FABRICATION DE RECIPIENTS SOUS PRESSION COMPOSITES ET PRODUITS FABRIQUES SELON CE PROCEDE

(43) Date of publication of application: 23.01.2002
(73) Proprietor: Pentair, Inc., Cincinnati, OH 45255 (US)
(72) Inventor: Murphy, James C., Chardon, OH 44020 (US); Boyce, Gerald S., Ruddin gton, Nottingham NG11 6AG (GB); Coeckelbergs, Erik, 2275 Wechelderzande (BE)
(74) Representative: Howden, Christopher Andrew
(86) International application number: PCT/US2000/004964
(87) International publication number: WO 2001/064427

(56) References cited:
- WO-A-98/51480
- DE-A- 4 215 756
- US-A- 3 426 940

## Description

### Field of the Invention

This invention relates to the art of fabricating pressure vessels and, more particularly, to improved methods for fabricating composite pressure vessels.

### Background of the Invention

Pressure vessels, such as hot water heaters, boilers, pressurised gas tanks and the like, have traditionally been fabricated from metal such as steel. However, in recent years, the use of composite pressure vessels has become more prevalent. These composite pressure vessels have typically been fabricated by a filament winding process which utilises thermoset plastic resins such as epoxies, polyesters and vinylesters. Briefly, this technology is the process of impregnating dry fibers, such as fiberglass strands, with catalyzed resin prior to application to a mandrel.

Preimpregnated fibers ("prepreg") may also be used. The mandrel and applied composite are then cured, at ambient temperature or with heat, to set-up the laminate and obtain a hard resin and fiber laminate shell. This shell is either removed from the mandrel or the mandrel itself becomes part of the finished product. Although the specific product application determines the exact function of the resin, in all cases, in all cases it serves as the support structure for keeping the continuous fiber strands in position.

The thermoset resins used in these processes can be categorised as of the low temperature commodity type which are characterised by their relative ease of use, low cost and availability.

These resins have long served to meet the performance requirements of a wide range of pressure vessel products. However, these resin systems have-well known drawbacks which may include their limited temperature capabilities, unsatisfactory finished product aesthetics, lack of extended durability, lack of appropriateness for recycling and manufacturing related issues such as downtime due to clean-up and material handling costs. Further, there are environmental concerns arising from worker exposure to vapor, overspray, emissions, etc. encountered during the fabrication processes.

Some engineered thermoset resins improve performance through higher temperature capability, but unacceptable material costs are associated with them.

In addition, because of the materials and processes employed, composite pressure vessels prepared according to the prior art processes inherently have residual and significant internal stresses which, along with certain temperature sensitive incompatibilities of the materials, limit the pressure and temperature ranges in which the pressure vessels find use.

Thus, increasing performance demands, environmental issues, manufacturing issues and new market opportunities have emphasized the limitations of the use of thermoset resins in the manufacture of composite pressure vessels. Composite pressure vessels with higher temperature and pressure capabilities, improved appearance and greater durability and impact resistant characteristics and which, as to fabrication, are more environmentally-friendly, more cost effective and present fewer manufacturing issues, are accordingly highly desirable.

Therefore, it will be recognised by those skilled in the art that a process for fabricating composite pressure vessels which achieves improvement in all these areas requires a fundamentally different philosophy. It is to the provision of such a fundamentally improved process, and to pressure vessels made by such process that the present invention is directed and by which the following characteristics are obtained: improved contact at higher temperatures between the fiber and resin, better control over reinforcement/matrix ratio, scrap materials which can be effectively recycled, diminished regulation issues caused by emissions, higher processing speeds for the winding (or other overlaying mode) and curing steps, potential labor savings due to less material handling, floor space reduction, adaptability to automation, a safer environment for employees, simplification of processing lines and of material storage and handling, faster changeover times, faster startups, lower training costs, lower energy costs, etc. Therefore, pressure vessels fabricated according to the process are substantially stress relieved and exhibit improved performance over the prior art pressure vessels in that, inter alia, they can withstand higher pressures and temperatures, are more impact resistant and also have a significantly better finish.

WO98/51480A discloses an arrangement and method for the molding of hollow plastic components, which comprise layers of reinforced plastic. The arrangement comprises a pressure membrane which is used as a core around which the material from which the hollow plastic component is to be formed is molded in a two-part mold. The pressure membrane is made of a stiff, thin walled but stretchable material and is self-supporting in a non-pressurised state.

### Objects of the Invention

It is a broad object of this invention to provide an improved process for fabricating a composite pressure vessel.

It is more particular an object of this invention to provide such an improved process which enjoys advantages including, as opposed to prior art processes of fabricating composite pressure vessels: better control over reinforcement/matrix ratio, scrap materials which can be effectively recycled, diminished regulation issues caused by emissions, higher processing speeds for the winding (or alternatives to winding) and curing steps, substantial labor savings due to less material handling, floor space reduction, susceptibility to automation, a safer environment for employees, simplification of processing lines and of material storage and handling, faster changeover times, faster startups, lower training costs, lower energy costs, etc.

In another aspect, it is an object of this invention to provide a process for fabricating composite pressure vessels which, in use, enjoys long term performance at least as good as that of traditional pressure vessels.

### Summary of the Invention

According to the invention there is provided a process for making a composite vessel using a provided thermoplastic liner, the composite vessel having at least one closed end, the thermoplastic liner having a layer comprising commingled fiber and thermoplastic material overlaid to obtain a composite intermediate structure, and in which the composite intermediate structure is heated and pressed in a pressing and heating apparatus comprising an upper bag and a lower bag; where the upper and lower bags are of such dimensions that, when in operative pressing and heating mutual positions, their facing peripheral regions abut to substantially encompass the composite intermediate structure, to effect at least partial consolidation of the components thereof; the process comprising the steps of:
A) placing the at least partially consolidated composite intermediate structure in a mold;
B) heating the composite intermediate structure against and into the shape of the interior walls of the mold;
C) continuing step B) until the thermoplastic liner and the overlaid layer fully consolidate to form a composite vessel;
D) cooling the mold and composite vessel until the composite vessel is solidified; and
E) removing the formed composite vessel from the mold.

Preferred embodiments are defined in the dependent claims. The commingled fiber and thermoplastic material may either be wound onto the liner or laid on the liner in the form of fabric woven from the fiber and threads of the thermoplastic material.

### Description of the Drawings

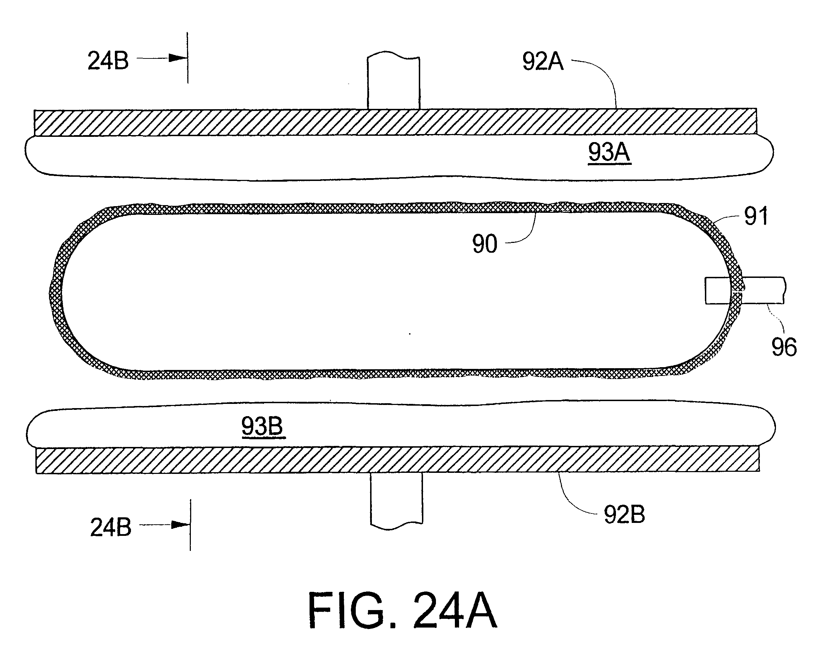

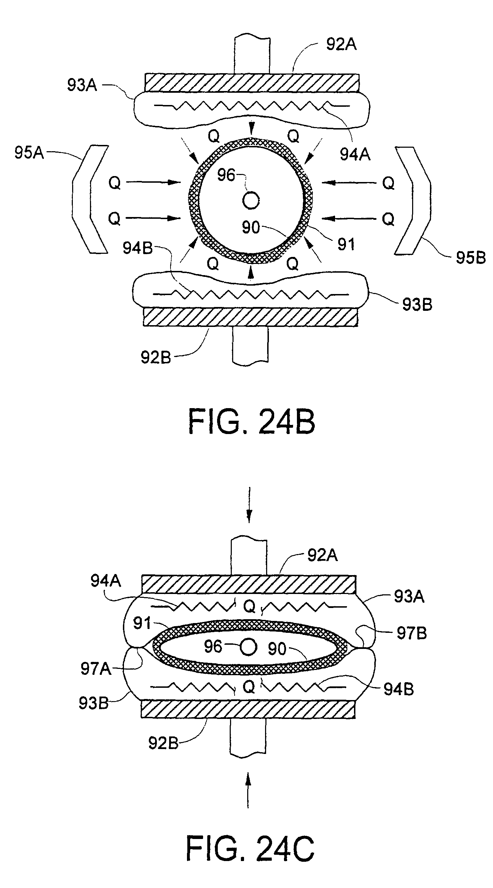

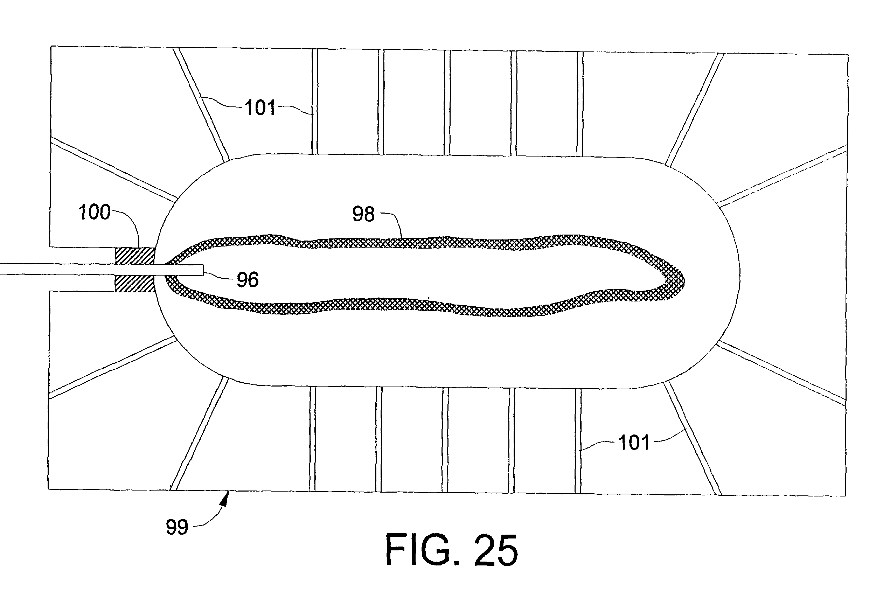

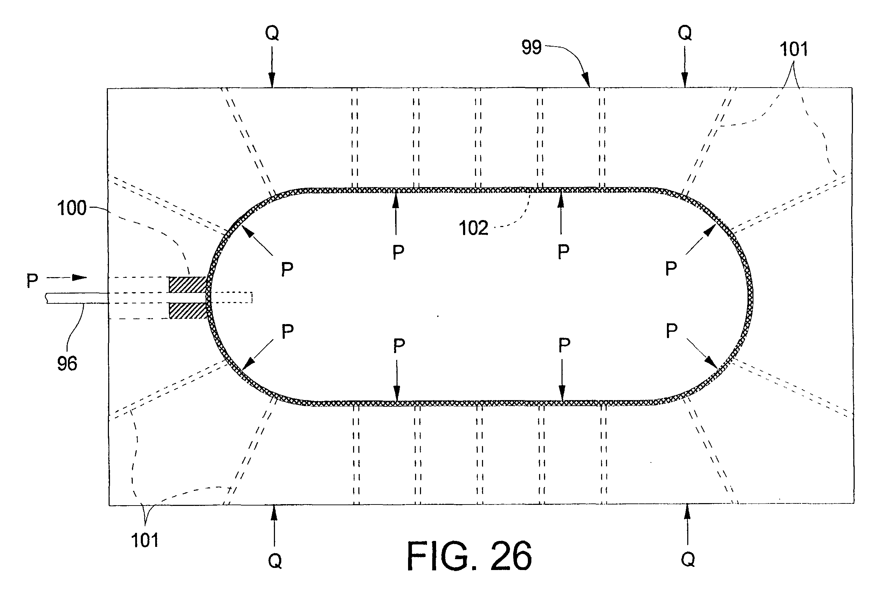

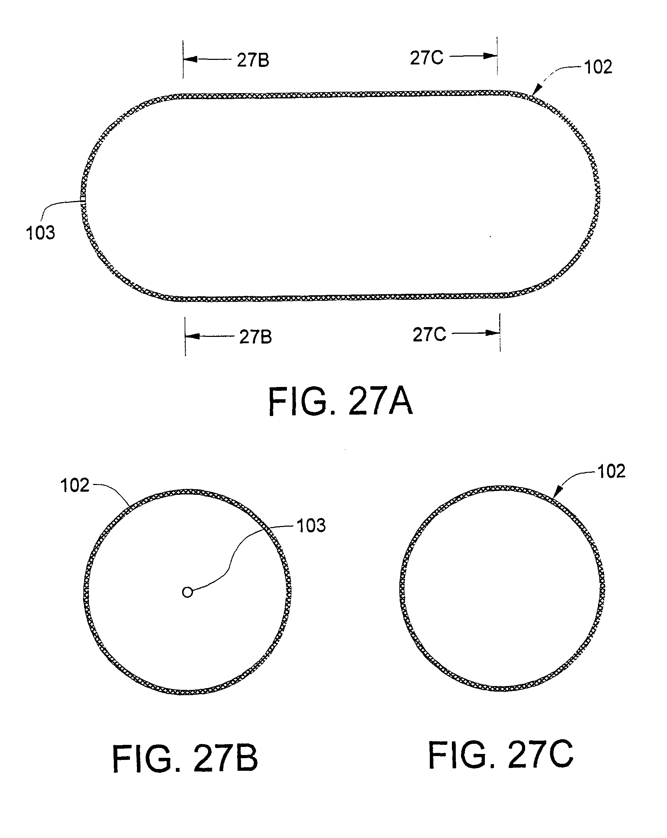

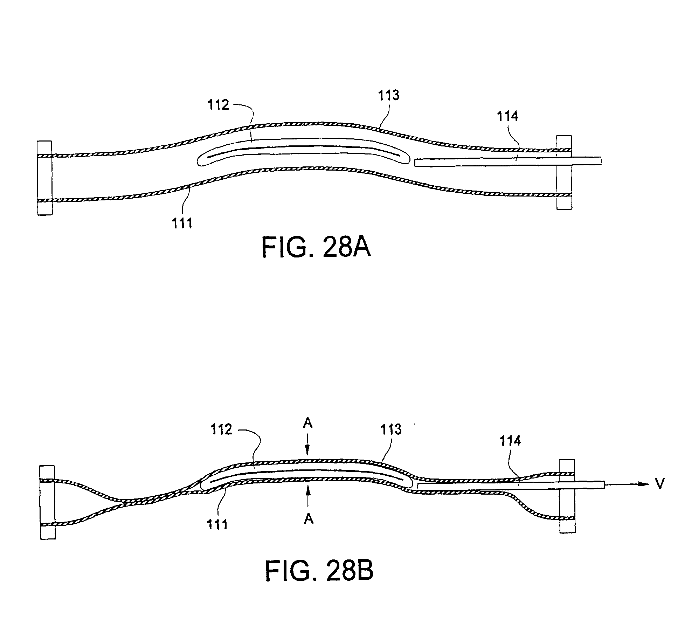

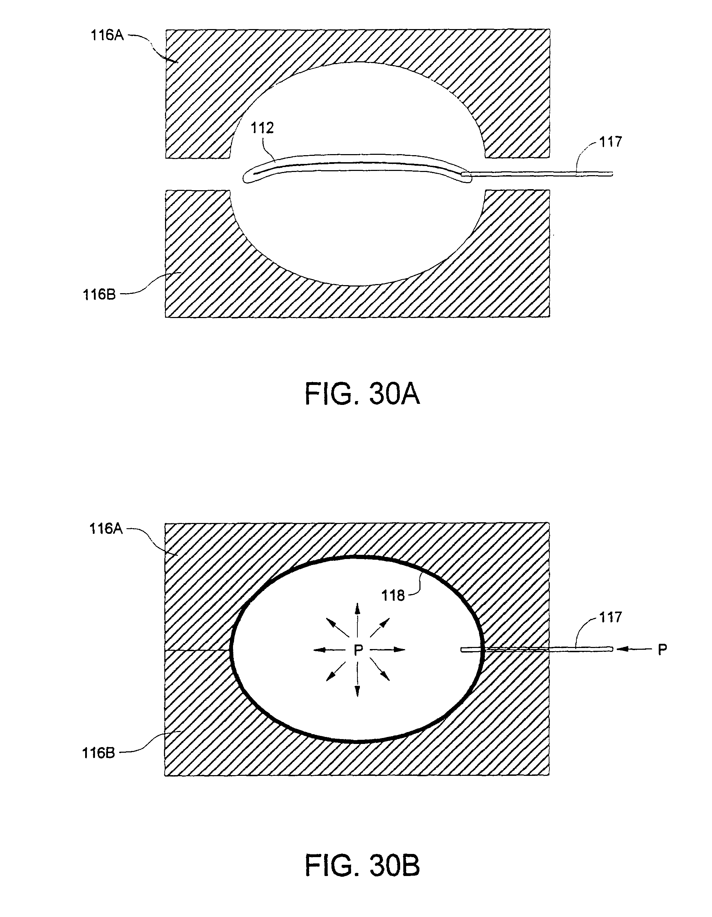

The subject matter of the invention is particularly pointed out and distinctly claimed in the concluding portion of the specification. The invention, however, both as to organisation and method of operation, may best be understood by reference to the following description taken in conjunction with the subjoined claims and the accompanying drawing of which:
FIG. 24A is a cross sectional view illustrating a preliminary step in preparing a composite pressure vessel in accordance with an embodiment of the invention.
FIG. 24B is a cross sectional view taken along the lines 24B - 24B of FIG. 24A;
FIG. 24C is a cross sectional view similar to FIG 24B illustrating a further step in the process which results in an intermediate preform for the composite pressure vessel under formation;
FIG. 25 is a cutaway view showing the interior of a mold into which the intermediate preform has been introduced for further processing according to the invention;
FIG. 26 is a partially phantom, partially cross sectional view similar to FIG. 25 illustrating the further processing which results in a completed composite pressure vessel;
FIG. 27A is a longitudinal cross sectional view of the completed composite pressure ;
FIG. 27B is a cross sectional view of the completed composite pressure vessel taken along the lines 27B-27B of FIG. 27A;
FIG. 27C is a cross sectional view of the completed composite pressure vessel taken along the lines 27C-27C of FIG. 27A;
FIG. 28A is a cross sectional view illustrating a preliminary step in preparing a composite pressure vessel in accordance with a variant of the sixth inventive embodiment in which upper and lower membranes are used in the consolidation process for a commingled preform;
FIG. 28B is a cross sectional view showing a vacuum being applied between the membranes to supply a consolidating atmospheric pressure force to the preform;
FIG. 29A is a cross sectional view showing the membrane assembly enclosing the preform being prepared for a heating step;
FIG. 29B is a cross sectional view showing heat being applied to the preform through the preform to bring about consolidation and render the preform fluid;
FIG. 30A is a cross sectional view of the fluid, consolidated preform being placed in a cold mold; and
FIG. 30 B is a cross sectional view of the formed pressure vessel in the cold mold.
FIGs. 24A-27C illustrate an inventive embodiment that is particularly well suited for fabricating closed end composite pressure vessels.

As shown in FIGs. 24A and 24B, a flexible thermoplastic mandrel/liner 90 is overlaid with a layer 91 of material constituting a thermoplastic combined with a fiber material as previously described. For example, layer 91 may constitute Twintex ® fabric having a +/-54° knit. Another exemplary material for the layer 91 is a commingled winding of thermoplastic material and fiber as also previously described. In order to increase hoop strength with a wound preform, it is desirable to provide more winding turns (for example, double the number) in the hoop direction as in the longitudinal direction or to wind the thermoplastic material and fiber at suitable angles (which may vary during the winding process) to obtain the desired hoop strength appropriate for the contemplated use of the completed composite pressure vessel.

Still referring to FIGs. 24A and 24B, upper 92A and lower 92B press plates respectively carry inflatable silicon rubber bags 93A, 93B which, as particularly shown in FIG. 24B, may enclose heaters 94A, 94B. The silicon rubber bags 93A, 93B may be fabricated, for example, from Mosites 1453D which has been identified above. As also shown in FIG. 24B, additional heaters 95A, 95B may be provided to afford supplementary preheat of the layer 91 and the underlying thermoplastic mandrel 90 which are to be preformed. A tube 96, which will be used to provide access to the interior of the preform later in the process, is emplaced at one end of the preliminary structure of thermoplastic and fiber as shown in FIGs. 24A and 24B.

Thus, the flexible thermoplastic mandrel 90 overlaid with the layer 91 as shown in FIGs. 24A and 24B, is uniformly preheated by the heaters 94A, 94B, 95A, 95B to institute the process of consolidation of the thermoplastic and fiber elements in the structure. When the consolidation process has proceeded to a point at which the thermoplastic/fiber layer 91 and thermoplastic mandrel 90 have sufficiently fused for the successive step shown in FIG. 24C, one or both of the press plates 92A, 92B are moved toward one another until the outboard portions of the bags 93A, 93B abut in the regions 97A, 97B which, in effect, extend continuously about the facing peripheral regions of the bags so that the mandrel 90 and layer 91 are completely encompassed. The bladders 93A, 93B may be permanently or controllably pressurised to ensure effective operation.

While the apparatus is in the position shown in FIG. 24C, the heating operation continues from heaters 94A, 94B until the consolidation of the thermoplastic material and fiber has been fully completed such that the material 91 and mandrel 90, once cooled, constitute a closed preform except for the opening in one end provided by the presence of the tube 96.

Referring now to FIG. 25 which shows one-half of a mold 99, the consolidated preform 98 (shown in cross section) has been placed in the interior of the mold with the tube 96 extending through a seal member 100 (shown in cross section). The interior surface of the mold 99, when both halves are mated, defines the outer surface of the composite pressure vessel being fabricated. The mold 99 also includes vents 101 as previously described.

FIG. 26 shows the mold 99 closed with heat Q applied, if necessary, to maintain sufficient fluidity of the preform for the molding step. Pressure is introduced into the interior of the preform through the tube 96 such that the preform expands outwardly until its outer surface engages the inner surface of the mold to thus establish the outer surface of the composite pressure vessel 102. Air in the mold outboard the preform escapes through the vents 101 as the preform expands under pressure during the expansion step. As explained above with respect to other invention embodiments, vacuum may be asserted through the vents 101 or otherwise introduced into the interior of the mold 00 outboard the preform 98 to supplement or replace the pressure introduced into the interior of the preform.

After the composite pressure vessel 102 (the fully expanded preform 98) has been formed in the mold 99, the mold is sufficiently cooled or allowed to cool to permit opening and removal of the pressure vessel which is illustrated in FIGs. 27A, 27B, 27C after the tube 26 has been removed. Thus, the end of the composite pressure vessel shown in FIG. 27C is closed whereas the end shown in FIG. 27B has only the small opening left after the removal of the tube 96. It will be understood that this opening may be sealed or threaded or subjected to such other operations as may be appropriate for the intended use of the completed composite pressure vessel. Further, the size of the tube 96 may be selected to facilitate such finishing operations. If desired, the composite pressure vessel 102 may also be further processed to add exterior and/or interior liners in the manner previously described.

FIGs. 28A, 28B, 29,30A and 30B show a variant process to that shown in FIGs. 24A 27C.

Referring first to FIG. 28A, a commingled thermoplastic preform 112, such as a flexible thermoplastic mandrel/liner overlaid with a layer of material constituting a thermoplastic combined with a fiber material as previously described, is positioned between an inner membrane 111 and an outer membrane 113. The inner membrane and outer membrane 113 may be fabricated, for example, from the silicone rubber material previously identified. Then, as shown in FIG. 28B, a vacuum is pulled, via tube 114, between the membranes 111,113 to remove air and apply an atmospheric consolidation pressure A to the preform 112.

An inner shaped contact heater and an outer shaped contact heater are positioned, respectively, facing the inner membrane and outer membrane.

Then the contact heaters are brought into contact, respectively, with the outer surfaces of the inner membrane 111 and the outer membrane 113. Sufficient heat is transferred from the contact heaters to the membranes 111,113 to raise the temperature of the preform to about 185 C-195 C in order to melt the commingled thermoplastic preform 112 and render the preform fluid.

While the working contours of the inner and outer contact heaters in the example are respectively concave and convex, it will be understood that any suitable working contour for each contact heater may be selected for processing a commingled thermoplastic given preform.

As shown in FIG. 30A the fluid and consolidated preform 112 is next placed into a cold mold 116A, 116B. The cold mold is then closed, FIG. 30B, and gas pressure is introduced into the interior of the fluid preform, via tube 117 (or by evacuating the exterior of the preform) to cause its walls to expand outwardly against the inner surfaces of the membranes 111, 113 until the outer surfaces of the membranes confirm to the contours of the inner wells of the cold mold 116A, 116B. As a result, the preform 112 is simultaneously formed and cooled (by heat transfer to the cold mold 116A, 116B) to effect the pressure vessel 118 which can be removed from the cold mold and finished as may be desired in accordance with the foregoing descriptions.

Composite pressure vessels fabricated in accordance with all the processes disclosed above have performance and aesthetic characteristics significantly improved over those fabricated with the prior art processes. More particularly, they can withstand higher pressures and temperatures, are more impact resistant and exhibit a significantly better finish. They also have good machinability attributes and can therefore readily be welded, cut, drilled, threaded, stamped or the like as may be desired to produce a high quality finished product.

Thus, while the principles of the invention have now been made clear in illustrative embodiments, there will be immediately obvious to the those skilled in the art many modifications of structure and components used in the practice of the invention which are particularly adapted for specific environments and operating requirements without departing from the scope of the invention as defined in the claims.

## Claims

1. A process for making a composite vessel using a provided thermoplastic liner (90), the composite vessel (102) having at least one closed end, the thermoplastic liner (90) having a layer (91) comprising commingled fiber and thermoplastic material overlaid to obtain a composite intermediate structure, and in which the composite intermediate structure is heated and pressed in a pressing and heating apparatus comprising an upper bag (93a) and a lower bag (93b); where the upper (93a) and lower (93b) bags are of such dimensions that, when in operative pressing and heating mutual positions, their facing peripheral regions abut to substantially encompass the composite intermediate structure, to effect at least partial consolidation of the components thereof; the process comprising the steps of:
A) placing the at least partially consolidated composite intermediate structure (98) in a mold (99);
B) heating the composite intermediate structure (98) against and into the shape of the interior walls of the mold (99);
C) continuing step B) until the thermoplastic liner (90) and the overlaid layer (91) fully consolidate to form a composite vessel (102);
D) cooling the mold (99) and composite vessel (102) until the composite vessel (102) is solidified; and
E) removing the formed composite vessel (102) from the mold (99).

2. The process of Claim 1 **characterised in that** the upper and lower bags (93a and 93b) of the pressing and heating apparatus are fabricated from silicone rubber and in which each of the upper and lower bags (93a and 93b) contain heaters (94a and 94b).

3. The process of Claim 1 in which, in the pressing and heating apparatus, the upper and lower bags (93a, 93b) respectively are carried in facing relationship by upper and lower press components (92a and 92b).

4. The process of Claim 3 **characterised in that** the upper and lower bags (93a, 93b) of the pressing and heating apparatus are fabricated from silicone rubber and in which both of the upper and lower bags (93a, 93b) contain heaters (94a, 94b).

5. The process of any of Claims 1 to 4 **characterised in that** the fiber and thermoplastic material are wound onto the thermoplastic liner to obtain the composite intermediate structure.

6. The process of any of Claims 1 to 4 **characterised in that** the fiber and thermoplastic material composite is commingled in a fabric prior to being overlaid onto the thermoplastic liner (91).

7. The process of any of Claims 1 to 6 **characterised in that** the force applied during step B) is obtained by introducing gas pressure into the interior of the composite intermediate structure (98).

## Revendications

1. Procédé de fabrication d'un récipient composite utilisant un revêtement interne thermoplastique (90) fourni, le récipient composite (102) ayant au moins une extrémité fermée, le revêtement interne thermoplastique (90) ayant une couche (91) comprenant des fibres mélangées et un matériau thermoplastique superposés, pour obtenir une structure composite intermédiaire, et dans lequel la structure composite intermédiaire est chauffée et pressée dans un appareil de chauffage et de pressage comprenant un sac supérieur (93a) et un sac inférieur (93b) : où les sacs supérieur (93a) et inférieur (93b) ont des dimensions telles que, lorsqu'ils sont dans des positions mutuelles de chauffage et de pressage, en fonctionnement, leurs régions périphériques opposées butent l'une contre l'autre pour entourer sensiblement la structure composite intermédiaire, pour effectuer au moins uné consolidation partielle des composants de celle-ci ; le procédé comprenant les étapes consistant à :
A) placer la structure composite intermédiaire (98) au moins partiellement consolidée dans un moule (99) ;
B) chauffer la structure composite intermédiaire (98) contre les parois internes du moule (99) et lui donner leur forme ;
C) continuer l'étape B), jusqu'à ce que le revêtement interne thermoplastique (90) et la couche superposée (91) soient totalement consolidés pour former un récipient composite (102) ;
D) refroidir le moule (99) et le récipient composite (102) jusqu'à ce que le récipient composite (102) soit solidifié ; et
E) enlever le récipient composite formé (102) du moule (99).

2. Procédé selon la revendication 1, **caractérisé en ce que** les sacs supérieur et inférieur (93a et 93b) de l'appareil de chauffage et de pressage sont fabriqués en caoutchouc de silicone, et dans lequel chacun des sacs supérieur et inférieur (93a et 93b) contient un dispositif chauffant (94a et 94b).

3. Procédé selon la revendication 1, dans lequel dans l'appareil de chauffage et de pressage, les sacs supérieur et inférieur (93a et 93b). respectivement, sont amenés en une relation d'opposition par des composants de presse supérieur et inférieur (92a et 92b).

4. Procédé selon la revendication 3, **caractérisé en ce que** les sacs supérieur et inférieur (93a et 93b) de l'appareil de chauffage et de pressage sont fabriqués en caoutchouc de silicone, et dans lequel les deux sacs supérieur et inférieur (93a et 93b) contiennent un dispositif chauffant (94a et 94b).

5. Procédé selon l'une quelconque des revendications 1 à 4, **caractérisé en ce que** les fibres et le matériau thermoplastique sont enroulés sur le revêtement interne thermoplastique pour obtenir la structure composite intermédiaire.

6. Procédé selon l'une quelconque des revendications 1 à 4, **caractérisé en ce que** le composite de fibres et de matériau thermoplastique est mélangé en un tissu avant d'être superposé sur le revêtement interne thermoplastique (91).

7. Procédé selon l'une quelconque des revendications 1 à 6, **caractérisé en ce que** la force appliquée pendant l'étape B) est obtenue en introduisant une pression gazeuse à l'intérieur de la structure composite intermédiaire (98).

## Patentansprüche

1. Verfahren zur Herstellung eines Behälters aus Verbundwerkstoff unter Verwendung eines bereitgestellten thermoplastischen Liners (90), wobei der Behälter aus Verbundwerkstoff (102) wenigstens ein geschlossenes Ende aufweist, der thermoplastische Liner (90) eine Schicht (91) aufweist, die miteinander verbunden Faser und thermoplastisches Material umfaßt, die darüber gelegt ist, um eine Verbimdzwischenstruktur zu erhalten, und bei dem die Verbundzwischenstruktur in einer Preß- und Heizapparatur, die einen oberen Beutel (93a) und einen unteren Beutel (93b) umfaßt, erhitzt und gepreßt wird, wobei die oberen (93a) und unteren (93b) Beutel solche Abmessungen haben, daß, wenn sie sich in ihren operativen gegenseitigen Preß- und Heizpositionen befinden, ihre gegenüberliegenden Randbereiche aneinanderstoßen, um die Verbundzwischenstruktur im wesentlichen zu umschließen, um wenigstens teilweises Zusammenfließen der Komponenten derselben zu bewirken; wobei das Verfahren die Schritte umfaßt:
A) Einbringen der wenigstens teilweise zusammengeflossenen Verbundzwischenstruktur (98) in eine Form (99);
B) Erhitzen der Verbundzwischenstruktur (98) gegen und in die Form der Innenwände der Form (99) hinein;
C) Fortsetzen von Schritt B), bis der thermoplastische Liner (90) und die darübergelegte Schicht (91) vollständig zusammenfließen, um einen Behälter aus Verbundwerkstoff (102) zu bilden;
D) Abkühlen der Form (99) und des Behälters auf Verbundwerkstoff (102), bis der Behälter aus Verbundwerkstoff (102) erstarrt ist; und
E) Entnehmen des ausgeformten Behälters aus Verbundwerkstoff (102) aus der Form (99).

2. Verfahren nach Anspruch 1, **dadurch gekennzeichnet, daß** die oberen und unteren Beutel (93a und 93b) der Preß- und Heizapparatur aus Silikonkautschuk hergestellt sind, und bei dem die oberen und unteren Beutel (93a und 93b) jeweils Heizeinrichtungen (94a und 94b) enthalten.

3. Verfahren nach Anspruch 1, **dadurch gekennzeichnet, daß** die oberen bzw. unteren Beutel (93a, 93b) in der Preß- und Heizapparatur in einander zugewandter Beziehung durch obere und untere Pressenkomponenten (92a und 92b) gehalten werden.

4. Verfahren nach Anspruch 3, **dadurch gekennzeichnet, daß** die oberen und unteren Beutel (93a, 93b) der Preß- und Heizapparatur aus Silikonkautschuk hergestellt sind, und bei dem sowohl die oberen als auch die unteren Beutel (93a, 93b) Heizeinrichtungen (94a, 94b) enthalten.

5. Verfahren nach einem der Ansprüche 1 bis 4, **dadurch gekennzeichnet, daß** die Faser und das thermoplastische Material auf den thermoplastischen Liner gewickelt werden, um die Verbundzwischenstruktur zu erhalten.

6. Verfahren nach einem der Ansprüche 1 bis 4, **dadurch gekennzeichnet, daß** der Verbundwerkstoff aus Faser und thermoplastischem Material in einem Gewebe miteinander verbunden wird, bevor er über den thermoplastischen Liner (91) gelegt wird.

7. Verfahren nach einem der Ansprüche 1 bis 6, **dadurch gekennzeichnet, daß** die während Schritt B) aufgebrachte Kraft erhalten wird durch Einbringen von Gasdruck in das Innere der Verbundzwischenstruktur (98).
